# EUROPÄISCHE PATENTANMELDUNG

(11) **EP 2 050 374 A1**
(43) Veröffentlichungstag der Anmeldung: **22.04.2009**
(21) Anmeldenummer: 09001612.2
(22) Anmeldetag: 05.04.2007
(51) Int. Cl.: A47J 39/02

(54) **Koch-, Gar-und/oder Warmhaltegerät, insbesondere Tischkochgerät**

(30) Priorität: 26.09.2006 DE 102006045766; 11.04.2006 DE 102006017345
(62) Teilanmeldung aus: 07007169.1
(71) Anmelder: Electrolux Home Products Corporation N.V., 1930 Zaventem (BE)
(72) Erfinder: Chong Yue Yee, Amelia, 41458 Göteborg (SE)
(74) Vertreter: Schröer, Gernot H.

(57) **Zusammenfassung**

Die Erfindung betrifft ein Koch-, Gar- und/oder Warmhaltegerät (1,1'), insbesondere Tischkochgezät, zum Kochen, Garen und/oder Warmhalten von Speisen,
a) umfassend ein Gehäuse (2') zur Aufnahme von wenigstens zwei Heizmitteln (5, 6; 5', 6') zum Kochen, Garen und/oder Warmhalten von Speisen,
b) wobei vorzugsweise das Koch-, Gar- und/oder Warmhaltegerät mobil ist, insbesondere vom Benutzer an unterschiedliche Benutzungsorte tragbar ist,
c) wobei das Gehäuse (2') mindestens zwei Kavitäten (3', 4') zum Einbringen von Speisen aufweist,
d) wobei mindestens eine der Kavitäten (3') zum Garen von Speisen ausgebildet ist,
e) wobei mindestens eine andere der Kavitäten (4') zum Warmhalten mindestens einer gegarten Speise ausgebildet ist,
f) wobei bevorzugt die Heizmittel (5', 6') in oder an den Kavitäten (3', 4') ausgebildet sind.

## Beschreibung

Die Erfindung betrifft ein Koch-, Gar- und/oder Warmhaltegerät, insbesondere Tischkochgerät, zum Garen und Warmhalten von Speisen.

Koch-, Gar- und Warmhaltegeräte der mannigfaltigsten Art sind im Stand der Technik bekannt. Mit ihnen können Speisen zubereitet werden. Ist dies geschehen, werden die fertigen Speisen in der Regel zum Verzehr an einen Tisch gebracht. Damit die Speisen nicht zu schnell abkühlen, sind verschiedenste Warmhaltevorrichtungen bekannt. Es existieren elektrisch betriebene Warmhalteplatten, auf denen die zubereiteten Speisen beliebig lange warm gehalten werden können. Ferner sind auch Metallplatten bekannt, die in einer zentral angeordneten Station auf eine gewisse Temperatur erwärmt und dann an den Tisch gebracht werden, um die zu verzehrenden Speisen darauf abzustellen. Durch die Wärmekapazität der Platte wird die Speise dann eine gewisse Zeit warm gehalten.

Während in größeren Küchen der logistische Aufwand für die Zubereitung und Warmhaltung von Speisen leichter bewältigt werden kann, ist insbesondere dies im kleineren Rahmen mitunter aufwändig. Zumeist wird im privaten Bereich die zu verzehrende Speise nach dem Kochen bzw. Garen direkt an den Tisch gebracht und ohne separate Warmhaltung gegessen. Die Zubereitung der Speise und deren Verzehr erfolgt also in der Regel getrennt. Es ist wünschenswert, Mittel bereitzustellen, die die einfache Zubereitung, insbesondere das einfache Garen, von Speisen und die gleichzeitige Warmhaltung ermöglicht, wobei der Handhabungsaufwand möglichst gering sein soll.

Der vorliegenden Erfindung liegt die Aufgabe zugrunde, ein Koch-, Gar- und/oder Warmhaltegerät zum Kochen, Garen und/oder Warmhalten von Speisen zu schaffen, mit dem diese Zielsetzung erreichbar ist. Es soll also in einfacher Weise möglich werden, eine Zubereitung, insbesondere ein Kochen oder Garen, von Speisen vorzunehmen und gleichzeitig die Speisen zum Verzehr warm zu halten.

Diese Aufgabe wird gemäß der Erfindung gelöst durch ein Koch-, Gar- und/oder Warmhaltegerät mit den Merkmalen des Anspruchs 1. Vorteilhafte Weiterbildungen ergeben sich aus den von Anspruch 1 abhängigen Ansprüchen.

Gemäß Anspruch 1 umfasst das Koch-, Gar- und/oder Warmhaltegerät, insbesondere Tischkochgerät, zum Kochen, Garen und/oder Warmhalten von Speisen
a) ein Trägerelement oder Gehäuse zur Aufnahme von wenigstens zwei Heizmitteln zum Kochen, Garen und/oder Warmhalten von Speisen,
b) wobei vorzugsweise das Koch-, Gar- und/oder Warmhaltegerät mobil ist, insbesondere vom Benutzer an unterschiedliche Benutzungsorte tragbar ist,
c) wobei das Gehäuse mindestens zwei Kavitäten zum Einbringen von Speisen aufweist,
d) wobei mindestens eine der Kavitäten zum Garen von Speisen ausgebildet ist,
e) wobei mindestens eine andere der Kavitäten zum Warmhalten mindestens einer gegarten Speise ausgebildet ist,
f) wobei bevorzugt die Heizmittel in oder an den Kavitäten ausgebildet sind.

Auf dem Trägerelement ist bevorzugt ein, besonders bevorzugt den Außenumfang des Trägerelements umlaufendes, Umfassungselement so lösbar befestigbar, dass das Trägerelement und das Umfassungselement einen Behälter ausbilden, insbesondere zur Lagerung und/oder zum Transport von Kochgeschirr.

Die mindestens zwei Heizmittel erlauben, dass ein gleichzeitiges Garen oder Kochen von Speisen und Warmhalten gegarter Speisen erfolgen kann, was es möglich macht, noch während des Essens am Tisch weitere Speisen zu garen oder kochen und verzehrfertige Speisen warm zu halten.

Vorzugsweise sind beide Heizmittel separat steuerbar. Zumindest eines der Heizmittel kann ein Induktionsheizgerät sein. Wenigstens ein Heizmittel kann modular aufgebaut sein und mindestens zwei wahlweise anordenbare unterschiedliche Heizelemente, vorzugsweise Heizplatten, aufweisen. Dabei ist insbesondere an eine Warmhalteplatte gedacht, die als Widerstandsheizung ausgebildet sein kann. Ein Heizelement kann als elektrischer Grill ausgebildet sein. Ferner kann eine Haube vorgesehen werden, die über dem modular ausgebildeten Heizelement bzw. über dem Heizmittel angeordnet werden kann.

Das eine oder wenigstens ein Heizelement ist vorzugsweise topfförmig ausgebildet. Dabei ist das eine oder wenigstens ein Heizelement besonders bevorzugt als Wok ausgebildet.

Der Behälter kann einen Deckel aufweisen. Dieser kann abnehmbar oder klappbar ausgebildet sein.

Auf dem Deckel kann eine eben ausgebildete Abstellfläche angeordnet sein. Das Trägerelement besteht bevorzugt aus wärmebeständigem thermoplastischem Material, um die Hitzebeständigkeit zu verbessern.

Zum einfachen Sauberhalten des Koch-, Gar- und/oder Warmhaltegeräts kann vorgesehen werden, dass mindestens eines der Heizmittel, vorzugsweise alle Heizmittel, mit einer Silikon-Beschichtung versehen ist bzw. sind.

Besonders bevorzugt sind zwei Heizmittel nebeneinander angeordnet, wobei diese in der Draufsicht eine runde oder ovale Form aufweisen können.

Mit dem vorgeschlagenen Koch-, Gar- und/oder Warmhaltegerät wird es möglich, insbesondere asiatische Gerichte in einfacher Weise zuzubereiten und zum Verzehr warm- und bereitzuhalten. Es ermöglicht die gleichzeitige Durchführung verschiedener Kochstile.

Es wird insbesondere möglich, die Zubereitung der Speisen und deren Verzehr praktisch gleichzeitig durchzuführen. Dies ermöglicht ein langsameres Essen als bei vorbekannten Lösungen. Auch kann hiermit die Zubereitungszeit verkürzt werden, die ansonsten die Hausfrau in der Küche verbringen muss, bis das Essen eingenommen werden kann.

Insbesondere kann das Koch-, Gar- und/oder Warmhaltegerät als mobiles Kochzentrum betrachtet werden, das in die Küche, in das Wohnzimmer oder nach draußen getragen werden kann. Auf diese Weise kann das normale Leben oder auch Gespräche fortgesetzt werden, während das Essen vorbereitet wird.

Bevorzugt umfasst das Gehäuse mindestens zwei Kavitäten zum Einbringen von Speisen, wobei mindestens eine der Kavitäten zum Garen von Speisen ausgebildet ist und wobei mindestens eine andere der Kavitäten zum Warmhalten mindestens einer gegarten Speise ausgebildet ist, wobei besonders bevorzugt die Heizmittel in oder an den Kavitäten ausgebildet sind.

Die mindestens zwei Kavitäten erlauben, dass ein gleichzeitiges Garen von Speisen und Warmhalten gegarter Speisen erfolgen kann, was es möglich macht, noch während des Essens am Tisch weitere Speisen zu garen und verzehrfertige Speisen warm zu halten.

Vorzugsweise haben beide Kavitäten separat steuerbare Heizmittel. Zumindest eines der Heizmittel kann ein Induktionsheizgerät sein. Ein Heizmittel kann modular aufgebaut sein und mindestens zwei wahlweise anordenbare unterschiedliche Heizelemente aufweisen. Dabei ist insbesondere an eine Warmhalteplatte gedacht, die als Widerstandsheizung ausgebildet sein kann. Ein Heizelement kann als elektrischer Grill ausgebildet sein. Ferner kann eine Haube vorgesehen werden, die über dem, insbesondere modular ausgebildeten, Heizelement bzw. über dem Heizmittel angeordnet werden kann.

Die eine oder wenigstens eine Kavität ist vorzugsweise topfförmig ausgebildet. Dabei ist die Kavität besonders bevorzugt als Wok ausgebildet.

Das Koch-, Gar- und/oder Warmhaltegerät kann einen Deckel aufweisen. Diese kann abnehmbar oder klappbar ausgebildet sein.

Im oberen Bereich des Koch-, Gar- und/oder Warmhaltegeräts kann neben mindestens einer der Kavitäten eine eben ausgebildete Abstellfläche angeordnet sein. Die Abstellfläche kann dabei aus wärmebeständigem thermoplastischen Material bestehen.

Zum einfachen Sauberhalten des Koch-, Gar- und/oder Warmhaltegeräts kann vorgesehen werden, dass mindestens eine der Kavitäten, vorzugsweise alle Kavitäten, mit einer Silikon-Beschichtung versehen ist bzw. sind.

Besonders bevorzugt sind zwei Kavitäten nebeneinander angeordnet, wobei diese in der Draufsicht eine runde oder ovale Form aufweisen können.

In den Zeichnungen sind Ausführungsbeispiele der Erfindung dargestellt. Es zeigen:
- FIG 1: eine Seitenansicht der mobilen Kochvorrichtung zum Kochen, Garen und Warmhalten von Speisen,
- FIG 2: die Draufsicht auf die Vorrichtung nach FIG 1,
- FIG 3: eine Seitenansicht eines Koch- bzw. Gar- und/oder Warmhaltegeräts zum Garen und Warmhalten von Speisen und
- FIG 4: die Draufsicht auf das Koch-, Gar- und/oder Warmhaltegerät nach FIG 3.

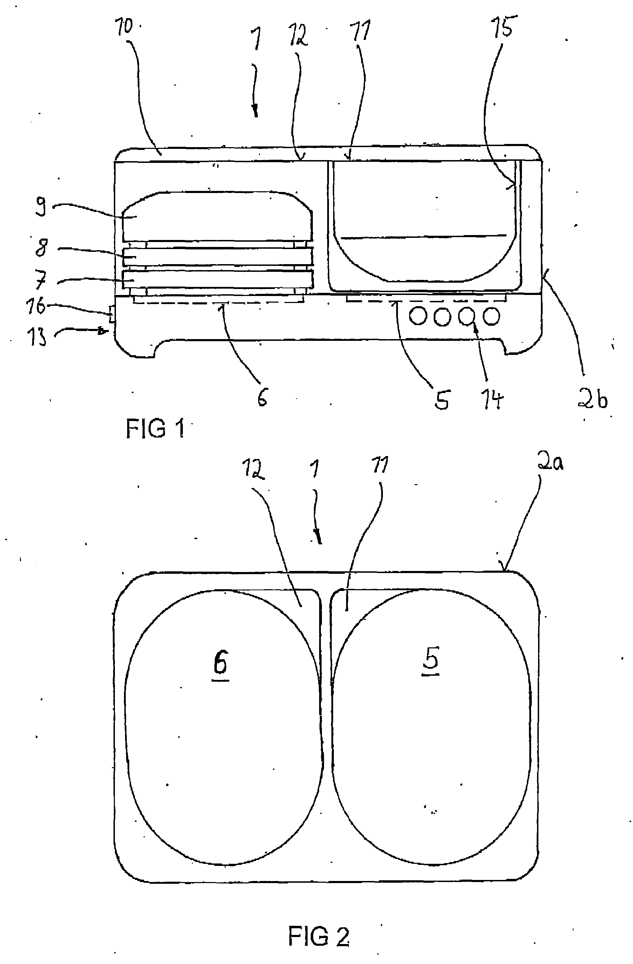

In den Figuren 1 und 2 ist ein Koch- bzw. Gar- und/oder Warmhaltegerät 1 zu sehen, das zum gleichzeitigen Zubereiten und Warmhalten von Speisen dient oder dieses ermöglicht. Es weist ein zumindest im wesentlichen quaderförmiges Gehäuse 2 aus einem Trägerelement 2a und einem Umfassungselement 2b auf, wobei in dessen unterem Bereich 13, vorzugsweise im Trägerelement 2a, eine Steuerungselektronik 14 sowie, insbesondere nebeneinander, zwei Heizmittel 5 und 6 angeordnet sind, die von der Steuerungselektronik 14 gesteuert bzw. geregelt werden. Die Heizmittel 5, 6 können dabei als Induktionsheizmittel ausgebildet sein; allerdings ist dies nicht zwingend.

Das Umfassungselement 2b bildet zusammen mit dem Trägerelement 2a einen Behälter aus, in dem Kochgeschirr gelagert oder transportiert werden kann. Üblicherweise umläuft das Umfassungselement 2b den Außenumfang des Trägerelements 2a. In einer vorteilhaften Ausführungsform können das Umfassungselement 2b und das Trägerelement 2a voneinander getrennt werden. Hierdurch lässt sich der Vorteil der guten Lagerbarkeit und Ttansportierbarkeit mit dem weiteren Vorteil einer guten Zugänglichkeit der Heizmittel 5 und 6 verbinden.

Das Koch-, Gar- und/oder Warmhaltegerät 1 kann mit einem Deckel 10 verschlossen werden, so dass sich ein geschlossenes Element ergibt, das sich in optisch ansprechender Weise gestalten lässt und sich bei Nichtbenutzung in den Essbereich einfügt. Der Deckel verfügt an dem auf dem Umfassungselement 2b aufliegenden Teil der Unterseite in einer vorteilhaften Ausführungsform über eine nicht dargestellte umlaufende Silikondichtung. Der Deckel 10 kann entweder dauerhaft oder lösbar mit dem Umfassungselement 2b verbunden sein.

Über den Stromanschluss 16 erfolgt die elektrische Versorgung des Koch-, Gar- und/oder Warmhaltegeräts 1.

Auf dem Heizmittel 5 ist ein topfförmiges Kochgerät 15 angeordnet. In diesem kann eine Speise gegart werden, wozu die Temperatur über die Steuerungselektronik 14 entsprechend hoch eingestellt wird. Besonders vorteilhaft ist es, die Höhe des Umfassungselements 2b so zu wählen, dass darin das topfförmige Kochgerät 15 so einbringbar ist, dass der Deckel 10 unmittelbar auf das Umfassungselement 2b und/oder das Umfassungselement 2b unmittelbar auf das Trägerelement 2a aufsetzbar ist. Dies erleichtert den Transport des Koch- bzw. Gar- und/oder Warmhaltegeräts 1.

Auf dem anderen Heizmittel 6 sind in FIG 1 verschiedene Elemente eingezeichnet, die hier in einer Nicht-Bettiebsposition, also insbesondere zur Lagerung oder zum Transport, zu sehen sind. Im Betrieb werden nur einzelne der dargestellten Elemente auf dem Heizmittel 6 platziert.

Dabei handelt es sich zum einen um ein Heizelement 7 in Form einer Wärmplatte, mit der eine gegarte Speise über einen längeren Zeitraum auf Speisetemperatur gehalten werden kann. Hierzu wird die Temperatur des Heizmittels 6 über die Steuerungselektronik 14 auf eine relativ niedrige Temperatur eingestellt.

Alternativ kann auch ein Heizelement 8 in Form eines Grills auf dem Heizmittel 6 angeordnet werden. In diesem Falle wird die Temperatur entsprechend höher eingestellt, so dass Speisen gegrillt werden können.

Ferner ist eine Haube 9 vorhanden, mit der warm zu haltende Speisen abgedeckt werden können, beispielsweise um sie in optimalem Verzehrzustand zu halten. Besonders vorteilhaft ist es, wenn die Haube 9 und die Heizelemente 7 und 8 stapelbar ausgebildet sind und/oder die Haube 9 passgenau auf den Topf 15 aufsetzbar ist. Dies ermöglicht eine besonders platzsparende und zugleich stabile Unterbringung von Haube 9 und Heizelementen 7 und 8. Das Köch- bzw. Gar- und/oder Warmhaltegerät 1 kann so in besonders vorteilhafter Weise transportiert werden.

Die Heizmittel 5, 6 können mit Silikon oder PTFE ausgekleidet sein, um ein Anhaften von Speiseresten zu verhindern. Ansonsten bestehen die Heizmittel bzw. zumindest die Bereiche, die an die Heizmittel 5, 6 angrenzen oder auch die Bereiche selbst, aus Metall oder induktionsheizungsfähigem Material (Curie-Material).

Nicht dargestellt sind gegebenenfalls erforderliche Utensilien, wie eine Kabeltrommel oder ein Kabelaufroller für die elektrische Versorgung des Geräts 1 und geeignete Küchengeräte, die für das Handhaben der Speisen insbesondere in dem relativ tiefen Topf 15 erforderlich sind.

Es ist denkbar, dass das Koch-, Gar- und/oder Warmhaltegerät unterschiedliche Behälter aufweist, die für unterschiedliche Zwecke verwendet werden können, beispielsweise zur Zubereitung von Suppe, als Kochplatte oder als Grill.

In dem Koch-, Gar- und/oder Warmhaltegerät können mehrere Speisen gleichzeitig zubereitet werden. Die Gerichte können auch nach dem Kochen wieder in dem Koch-, Gar- und/oder Warmhaltegerät platziert werden.

Als Abmessung des Koch-, Gar- und/oder Warmhaltegeräts 1 haben sich Werte im Bereich von 280 mm (für die Breite) und 190 mm (für die Tiefe) besonders bewährt.

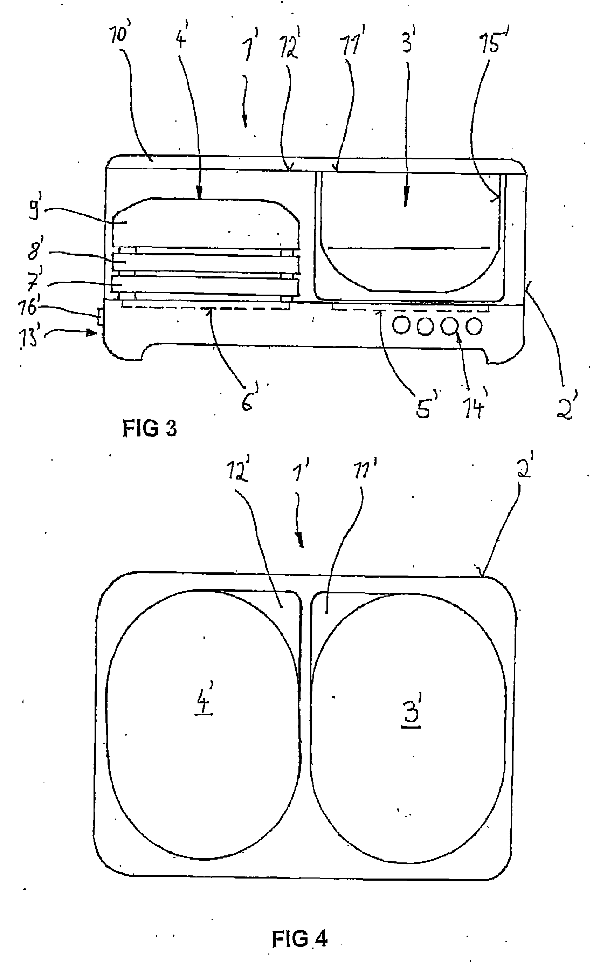

In den Figuren 3 und 4 ist ein Koch-, bzw. Gar- und/oder Warmhaltegerät 1' zu sehen, das zum gleichzeitigen Zubereiten und Warmhalten von Speisen dient. Es weist ein quaderförmiges Gehäuse 2' auf, in dessen unterem Bereich 13' eine Steuerungselektronik 14' sowie zwei Heizmittel 5' und 6' angeordnet sind, die von der Steuerungselektronik 14' gesteuert bzw. geregelt werden. Die Heizmittel 5', 6' können dabei als Induktionsheizmittel ausgebilder sein, allerdings ist dies nicht zwingend. Das Koch-, Gar- und/oder Warmhaltegerät 1' kann mit einem Deckel 10' verschlossen werden, so dass sich ein geschlossenes Element ergibt, das sich in optisch ansprechender Weise gestalten lässt und sich bei Nichtbenutzung in den Essbereich einfügt. Über den Stromanschluss 16' erfolgt die elektrische Versorgung des Koch-, Gar- und/oder Warmhaltegeräts 1'.

In einer Kavität 3', d. h. in einer höhlenförmigen Aufnahme im Gehäuse 2', ist ein topfförmiger Einsatz 15' angeordnet. In diesem kann eine Speise gegart werden, wozu die Temperatur über die Steuerungselektronik 14' entsprechend hoch eingestellt wird.

In der anderen Kavität 4' sind in FIG 3 verschiedene Elemente eingezeichnet, die hier in einer Nicht-Betriebsposition zu sehen sind. Im Betrieb werden nur einzelne der dargestellten Elemente in der Kavität 4' platziert.

Dabei handelt es sich zum einen um ein Heizelement 7' in Form einer Wärmplatte, mit der eine gegarte Speise über einen längeren Zeitraum auf Speisetemperatur gehalten werden kann. Hierzu wird die Temperatur des Heizelements 6' über die Steuerungselektronik 14' auf eine relativ niedrige Temperatur eingestellt.

Alternativ kann auch ein Heizelement 8' in Form eines Grills auf dem Heizmittel 6' angeordnet werden. In diesem Falle wird die Temperatur entsprechend höher eingestellt, so dass Speisen gegrillt werden können.

Ferner ist eine Haube 9' vorhanden, mit der warm zu haltende Speisen abgedeckt werden können, beispielsweise um sie in optimalem Verzehrzustand zu halten.

Auf der Oberfläche des geöffneten Koch-, Gar- und/oder Warmhaltegeräts 1' sind zwei Abstellfläche 11' und 12' vorhanden, auf der Besteck u. ä. abgelegt werden kann, das für die Zubereitung und Handhabung der Speisen benötigt wird.

Die Kavitäten 3', 4' können mit Silikon oder PTFE ausgekleidet sein, um ein Anhaften von Speiseresten zu verhindern. Ansonsten bestehen die Kavitäten bzw. zumindest die Bereiche, die an die Heizmittel 5', 6' angrenzen, aus induktionsheizungsfähigem Material (Curie-Material).

Nicht dargestellt sind gegebenenfalls erforderliche Utensilien, wie eine Kabeltrommel für die elektrische Versorgung des Koch-, Gar- und/oder Warmhaltegeräts 1' und geeignete Küchengeräte, die für das Handhaben der Speisen insbesondere in dem relativ tiefen Topf 15' erforderlich sind.

Als Abmessung des Koch-, Gar- und/oder Warmhaltegeräts 1' haben sich Werte im Bereich von 280 mm (für die Breite) und 190 mm (für die Tiefe) besonders bewährt.

### Bezugszeichenliste

- 1: Koch- bzw. Gar- und Warmhaltegerät
- 2: Gehäuse
- 2a: Trägerelement
- 2b: Umfassungselement
- 5: Heizmittel
- 6: Heizmittel
- 7: Heizelement
- 8: Heizelement
- 9: Haube
- 10: Deckel
- 11: Abstellfläche
- 12: Abstellfläche
- 13: unterer Bereich
- 14: Steuerungselektronik
- 15: topfförmiges Kochgerät
- 16: Stromanschluss
- 1': Koch- bzw. Gar- und Warmhaltegerät
- 2': Gehäuse
- 3': Kavität
- 4': Kavität
- 5': Heizmittel
- 6': Heizmittel
- 7': Heizelement
- 8': Heizelement
- 9': Haube
- 10': Deckel
- 11': Abstellfläche
- 12': Abstellfläche
- 13': unterer Bereich
- 14': Steuerungselektronik
- 15': topfförmiger Einsatz
- 16': Stromanschluss

## Patentansprüche

1. Koch-, Gar- und/oder Warmhaltegerät (1, 1'), insbesondere Tischkochgerät, zum Kochen, Garen und/oder Warmhalten von Speisen,
a) umfassend ein Gehäuse (2') zur Aufnahme von wenigstens zwei Heizmitteln (5, 6; 5', 6') zum Kochen, Garen und/oder Warmhalten von Speisen,
b) wobei vorzugsweise das Koch-, Gar- und/oder Warmhaltegerät mobil ist, insbesondere vom Benutzer an unterschiedliche Benutzungsorte tragbar ist,
c) wobei das Gehäuse (2') mindestens zwei Kavitäten (3', 4') zum Einbringen von Speisen aufweist,
d) wobei mindestens eine der Kavitäten (3') zum Garen von Speisen ausgebildet ist,
e) wobei mindestens eine andere der Kavitäten (4') zum Warmhalten mindestens einer gegarten Speise ausgebildet ist,
f) wobei bevorzugt die Heizmittel (5', 6') in oder an den Kavitäten (3', 4') ausgebildet sind.

2. Koch-, Gar- und/oder Warmhaltegerät nach Anspruch 1,
wobei auf dem Trägerelement (2a) ein, vorzugsweise den Außenumfang des Trägerelements (2a) umlaufendes, Umfassungselement (2b) so lösbar befestigbar ist, dass das Trägerelement (2a) und das Umfassungselement (2b) einen Behälter (2) ausbilden, insbesondere zur Lagerung und/oder zum Transport von Kochgeschirr.

3. Koch-, Gar- und/oder Warmhaltegerät nach einem der vorhergehenden Ansprüche, wobei beide Heizmittel (5', 6'; 5, 6) separat steuerbar sind und/oder zumindest eines der Heizmittel (5', 6'; 5, 6) ein Induktionsheizgerät ist.

4. Koch-, Gar- und/oder Warmhaltegerät nach einem der vorhergehenden Ansprüche,
a) wobei wenigstens ein Heizmittel (5, 6; 5', 6') modular aufgebaut ist und mindestens zwei wahlweise anordenbare unterschiedliche Heizelemente (7, 8, 7', 8') aufweist,
b) wobei bevorzugt wenigstens ein Heizelement (7; 7') eine Heizplatte, insbesondere eine vorzugsweise als Widerstandsheizung ausgebildete Warmhalteplatte ist, und/oder bevorzugt wenigstens ein Heizelement (8; 8') als elektrischer Grill ausgebildet ist.

5. Koch-, Gar- und/oder Warmhaltegerät nach Anspruch 4, wobei eine Haube (9') über dem, insbesondere modular ausgebildeten, Heizelement (7, 8, 7', 8') und/oder Heizmittel (5, 6; 5', 6') angeordnet werden kann.

6. Koch-, Gar- und/oder Warmhaltegerät nach einem der vorhergehenden Ansprüche, wobei wenigstens eine Kavität (3') topfförmig, insbesondere als Wok, ausgebildet ist.

7. Koch-, Gar- und/oder Warmhaltegerät nach einem der vorergehenden Ansprüche, wobei das Gerät, das Gehäuse und/oder der Behälter (2) einen Deckel (10, 10') aufweist, wobei der Deckel (10, 10') bevorzugt abnehmbar und/oder klappbar ausgebildet ist.

8. Koch-, Gar- und/oder Warmhaltegerät nach einem der vorhergehenden Ansprüche, wobei im oberen Bereich des Geräts (1') neben mindestens einer der Kavitäten (3', 4') eine eben ausgebildete Abstellfläche (11', 12') angeordnet ist und/oder das Trägerelement (2a) und/oder die Abstellfläche (11', 12') wärmebeständiges thermoplastisches Material umfasst und/oder das Trägerelement (2a) und/oder mindestens eine der Kavitäten (3', 4') mit einer Silikon-Beschichtung versehen ist.

9. Koch-, Gar- und/oder Warmhaltegerät nach einem der vorhergehenden Ansprüche, wobei wenigstens zwei Heizmittel (5, 6) und/oder Heizelemente (7, 8) und/oder Kavitäten (3', 4') nebeneinander angeordnet sind und/oder die Heizmittel (5, 6) und/oder Heizelemente (7, 8) und/oder Kavitäten (3', 4') in der Draufsicht eine runde oder ovale Form aufweisen.
